(19) Europäisches Patentamt / European Patent Office / Office européen des brevets

(11) **EP 4 748 239 A1**

(12) **EUROPEAN PATENT APPLICATION**
published in accordance with Art. 153(4) EPC

(43) Date of publication:
**27.05.2026 Bulletin 2026/22**

(21) Application number: **24843194.2**

(22) Date of filing: **18.07.2024**

(51) International Patent Classification (IPC):
**A23L 33/18** (2016.01)   **A23L 5/00** (2016.01)
**A23L 33/17** (2016.01)   **A23L 33/115** (2016.01)
**A23L 33/125** (2016.01)

(52) Cooperative Patent Classification (CPC):
**A23L 5/00; A23L 33/115; A23L 33/125;
A23L 33/17; A23L 33/18**

(86) International application number:
**PCT/JP2024/025862**

(87) International publication number:
**WO 2025/018406 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **20.07.2023   JP 2023118378
25.09.2023   JP 2023161778**

(71) Applicant: **Otsuka Pharmaceutical Factory, Inc.
Naruto-shi, Tokushima 772-8601 (JP)**

(72) Inventors:
• **AKIYAMA, Ryosuke
Naruto-shi, Tokushima 772-8601 (JP)**
• **ENDO, Naoyuki
Naruto-shi, Tokushima 772-8601 (JP)**
• **YAMAOKA, Ippei
Naruto-shi, Tokushima 772-8601 (JP)**

(74) Representative: **Hoffmann Eitle
Patent- und Rechtsanwälte PartmbB
Arabellastraße 30
81925 München (DE)**

(54) **EMULSIFIED NUTRITIONAL COMPOSITION**

(57)     The present invention addresses the problem of providing an emulsified nutritional composition having excellent emulsion stability and having total calories of 0.9 kcal/mL or greater, where the ratio of lipid calories to total calories is 40% or greater. This emulsified nutritional composition contains protein and lipid, and has total calories of 0.9 kcal/mL or greater, where the ratio of lipid calories to total calories is 40% or greater. The protein contains collagen peptides having a weight-average molecular weight of 3000 or less.

EP 4 748 239 A1

## Description

Technical Field

The present invention relates to an emulsified nutritional composition having excellent emulsion stability and having total calories of 0.9 kcal/mL or more and a ratio of lipid calories to the total calories of 40% or more.

Background Art

Patients with brain disorder, such as cerebral apoplexy, elderly people, and the like often have reduced swallowing function and suffer from dysphagia in which at the time of ingesting a food, the food accidentally flows into the trachea or lung. As a means for providing nutritional supplementation to such a dysphagic patient, a concentrated liquid diet capable of taking in high calories with a small amount is known.

The concentrated liquid diet contains nutrient components such as proteins, lipids, and carbohydrates, and is usually provided in an emulsified state. Conventionally, various compositions of the concentrated liquid diet have been proposed according to the nutrition state of a subject, the functionality to be imparted, and the like. For example, PTL 1 has reported that by using an enteral nutrient preparation containing protein and a lipid, in which 90 wt% or more of the protein is not milk-derived protein, and (a) an amino acid score of a mixture of the protein and the amino acid is 100, and a lipid calorie ratio is 40% or more, or (b) an amino acid score of a mixture of the protein and the amino acid is less than 100, and a lipid calorie ratio is 15% or more, it is possible to provide nutritional supplementation to a subject in a poor nutrition state while preventing or suppressing refeeding syndrome.

Citation List

Patent Literature

PTL 1: WO 2023/282316 A

Summary of Invention

Technical Problem

In order to develop an emulsified nutritional composition capable of efficiently providing a lipid, the present inventors have conducted studies on a nutritional composition in which a ratio of lipid calories to total calories of the emulsified nutritional composition is increased, and as a result, have found that when the emulsified nutritional composition has total calories of 0.9 kcal/mL and a ratio of lipid calories to the total calories of 40% or more, there are problems in that the particle size of emulsified particles is increased, and emulsion stability is deteriorated.

Therefore, an object of the present invention is to provide an emulsified nutritional composition having excellent emulsion stability and having total calories of 0.9 kcal/mL or more and a ratio of lipid calories to the total calories of 40% or more. Solution to Problem

The present inventors have conducted intensive studies in order to solve the above-mentioned problem, and as a result, have found that when a collagen peptide having a weight-average molecular weight of 3000 or less is contained as a protein in an emulsified nutritional composition containing a protein and a lipid and having total calories of 0.9 kcal/mL or more and a ratio of lipid calories to the total calories of 40% or more, the particle size of the emulsified particles is micronized, and excellent emulsion stability is provided. The present invention has been completed by conducting further studies on the basis of such findings.

That is, the present invention provides inventions of the following aspects.

Item 1. An emulsified nutritional composition containing a protein and a lipid, wherein

the emulsified nutritional composition has total calories of 0.9 kcal/mL or more and a ratio of lipid calories to the total calories of 40% or more, and
the emulsified nutritional composition comprises a collagen peptide having a weight-average molecular weight of 3000 or less as the protein.

Item 2. The emulsified nutritional composition according to item 1, wherein a median diameter of emulsified particles in the emulsified nutritional composition is 2.0 $\mu$m or less.

Item 3. The emulsified nutritional composition according to item 1 or 2, comprising 25 mg/mL or more of the collagen peptide.

Item 4. The emulsified nutritional composition according to any one of items 1 to 3, containing a protein other than the collagen peptide and/or an amino acid, wherein a mass ratio of the collagen peptide : a total amount of the protein other than the collagen peptide and/or the amino acid is 1 : 0.7 to 1.2.

Item 5. The emulsified nutritional composition according to any one of items 1 to 4, containing a protein other than the collagen peptide and/or an amino acid, wherein a weight-average molecular weight of the collagen peptide and the protein other than the collagen peptide and/or the amino acid is 2000 or less.

Item 6. The emulsified nutritional composition according to any one of items 1 to 5, further containing a carbohydrate.

Item 7. The emulsified nutritional composition according to any one of items 1 to 6, containing 35 mg/mL or more of the lipid.

Item 8. The emulsified nutritional composition according to item 6, containing 41 mg/mL or more of the carbohydrate.

Item 9. The emulsified nutritional composition according to any one of items 1 to 8, further containing an emulsifier.

Item 10. The emulsified nutritional composition according to any one of items 1 to 9, further containing a vitamin.

Item 11. The emulsified nutritional composition according to any one of items 1 to 10, further containing a mineral.

Item 12. The emulsified nutritional composition according to any one of items 1 to 11, further containing carnitine.

Item 13. The emulsified nutritional composition according to any one of items 1 to 12, wherein a ratio of total calories of the protein and the amino acid to the total calories is 15% or more.

Item 14. The emulsified nutritional composition according to any one of items 1 to 13, wherein a ratio of carbohydrate calories to the total calories is 15% or more.

Item 15. The emulsified nutritional composition according to any one of items 1 to 14, which is used as a concentrated liquid diet or enteral nutrient for a dysphagic patient.

Item 16. The emulsified nutritional composition according to any one of items 1 to 15, which is used for preventing or suppressing refeeding syndrome.

Item 17. The emulsified nutritional composition according to any one of items 1 to 16, which is used for preventing or suppressing hypophosphatemia.

Advantageous Effects of Invention

According to the present invention, excellent emulsion stability can be imparted to an emulsified nutritional composition having total calories of 0.9 kcal/mL or more and a ratio of lipid calories to the total calories of 40% or more.

Brief Description of Drawings

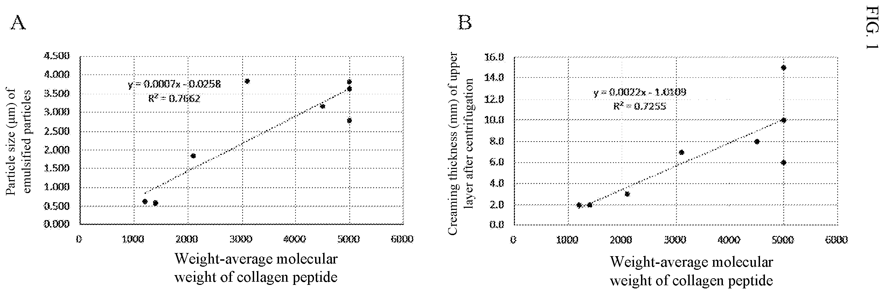

[Fig. 1] Fig. 1 is a view showing a relationship (A) between a weight-average molecular weight of a collagen peptide used and a particle size of emulsified particles and a relationship (B) between a weight-average molecular weight of collagen peptide used and a creaming thickness of an upper layer after centrifugation, in emulsified nutritional compositions of Examples 1 to 4 and Comparative Examples 1 to 5.

Description of Embodiments

An emulsified nutritional composition of the present invention contains a protein and a lipid and has total calories of 0.9 kcal/mL or more and a ratio of lipid calories to the total calories of 40% or more, in which the emulsified nutritional composition contains a collagen peptide having a weight-average molecular weight of 3000 or less as the protein. Hereinafter, the emulsified nutritional composition of the present invention will be specifically described.

[Protein and amino acid]

In the field of nutritional compositions, it is common to classify, as a protein, a peptide obtained by hydrolyzing a protein. Therefore, also in the present invention, when expressed as a protein, not only a natural protein contained in plants, animals, and the like but also a peptide obtained by hydrolyzing the protein are included.

The emulsified nutritional composition of the present invention contains a collagen peptide having a weight-average molecular weight of 3000 or less as the protein. By using a collagen peptide satisfying such a weight-average molecular weight, excellent emulsion stability can be imparted to an emulsified nutritional composition having total calories of 0.9 kcal/mL or more and a ratio of lipid calories of 40% or more.

The weight-average molecular weight of the collagen peptide used in the present invention may be 3000 or less, and is preferably 200 to 3000, more preferably 500 to 1500, most preferably 1000 to 1500, and particularly preferably 1200 to 1400. In the present invention, the weight-average molecular weight of collagen peptide is a value measured using gel permeation chromatography (GPC) using, as standard substances, cytochrome c (molecular weight: 12,327), aprotinin (molecular weight: 6,512), bacitracin (molecular weight: 1,450), angiotensin II (molecular weight: 1,046), a tetrapeptide consisting of Gly-Gly-Tyr-Arg (molecular weight: 451), and a tripeptide consisting of Gly-Gly-Gly (molecular weight: 189).

The type of collagen as a raw material of the collagen peptide used in the present invention may be any of types I, II, III, IV, V, VI, VII, VIII, IX, X, XI, XV, XVII, and the like, and may be a combination of two or more types. Among these types, type I is preferable.

The origin of collagen as a raw material of the collagen peptide used in the present invention is not particularly limited, and examples thereof include collagen derived from mammals such as porcine and bovine; collagen derived from fish; and collagen derived from birds such as chickens. The collagen peptides derived from one kind may be used singly, or collagen peptides derived from two or more kinds may be used in combination. Among these, preferable examples thereof include collagen derived from mammals and fish, and more preferable examples thereof include collagen derived from pigs and fish.

The collagen peptide used in the present invention can be obtained by hydrolyzing collagen with an enzyme, an acid, or an alkali. The collagen peptide used in the present invention may be a commercially available product such as "TYPE-S" (Nitta Gelatin Inc.), "TYPE-M" (Nitta Gelatin Inc.), "Collapep PU" (Nitta Gelatin Inc.), "SCP-2000" (Nitta Gelatin Inc.), and "CQT-F21" (Nippi, Incorporated).

The content of the collagen peptide in the emulsified nutritional composition of the present invention is, for example, preferably 25 mg/mL or more, more preferably 26 mg/mL or more, and most preferably 27 mg/mL or more. The content of the collagen peptide is preferably 40 mg/mL or less, more preferably 39 mg/mL or less, and most preferably 38 mg/mL or less. The range of the content of the collagen peptide is, for example, preferably any of 25 to 40 mg/mL, 25 to 39 mg/mL, 25 to 38 mg/mL, 26 to 40 mg/mL, 26 to 39 mg/mL, 26 to 38 mg/mL, 27 to 40 mg/mL, 27 to 39 mg/mL, 27 to 38 mg/mL, 30 to 36 mg/mL, and 31 to 35 mg/mL.

The emulsified nutritional composition of the present invention may contain a protein other than the collagen peptide. The type of the protein other than the collagen peptide is not particularly limited, and examples thereof include plant-derived proteins such as soybean protein, soybean peptide (hydrolysate of soybean protein), wheat protein, wheat peptide (hydrolysate of wheat protein), pea protein, pea peptide (hydrolysate of pea protein), rice protein, and rice peptide (hydrolysate of a rice protein); and animal-derived proteins such as collagen, whey protein, whey peptide (hydrolysate of whey protein), casein, and casein peptide (hydrolysate of casein protein). Among these, plant-derived proteins are preferable, soybean protein and soybean peptide are more preferable, and soybean peptide is more preferable.

When the emulsified nutritional composition of the present invention contains a protein other than the collagen peptide as the protein, the content of the protein other than the collagen peptide in the emulsified nutritional composition of the present invention is preferably 13 mg/mL or more, more preferably 14 mg/mL or more, and most preferably 15 mg/mL or more. The content of the protein other than the collagen peptide is preferably 27 mg/mL or less, preferably 26 mg/mL or less, and most preferably 25 mg/mL or less. The range of the content of the protein other than collagen peptide is, for example, preferably any of 13 to 27 mg/mL, 13 to 26 mg/mL, 13 to 25 mg/mL, 14 to 27 mg/mL, 14 to 26 mg/mL, 14 to 25 mg/mL, 15 to 27 mg/mL, 15 to 26 mg/mL, 15 to 25 mg/mL, 19 to 23 mg/mL, and 20 to 22 mg/mL.

The emulsified nutritional composition of the present invention may contain an amino acid as necessary. The type of the amino acid is not particularly limited, and examples thereof include essential amino acids such as valine, leucine, isoleucine, methionine, lysine, phenylalanine, tryptophan, threonine, and histidine; and non-essential amino acids such as arginine, glycine, alanine, serine, tyrosine, cysteine, asparagine, glutamine, proline, aspartic acid, and glutamic acid. One embodiment of the emulsified nutritional composition of the present invention includes the nine types of essential amino acids.

When an amino acid is contained in the emulsified nutritional composition of the present invention, the content thereof may be appropriately set according to the type of amino acid to be used, the type and content of protein contained, the energy density to be provided, and the like, and for example, the total amount of amino acids is preferably 7.5 mg/mL or more, more preferably 8.0 mg/mL or more, and most preferably 8.5 mg/mL or more. The total amount of the amino acids is preferably 11.0 mg/mL or less, preferably 10.5 mg/mL or less, and most preferably 10.0 mg/mL or less. The range of the total amount of amino acids is, for example, preferably any of 7.5 to 11 mg/mL, 8.0 to 11.0 mg/mL, 8.5 to 11.0 mg/mL, 7.5 to 10.5 mg/mL, 8.0 to 10.5 mg/mL, 8.5 to 10.5 mg/mL, 7.5 to 10.0 mg/mL, 8.0 to 10.0 mg/mL, 8.5 to 10.0 mg/mL, 9.6 to 10.0 mg/mL, and 9.7 to 9.9 mg/mL.

When the emulsified nutritional composition of the present invention contains the collagen peptide, the protein other than the collagen peptide, and/or the amino acid, the total amount thereof in the emulsified nutritional composition of the present invention is preferably 45.5 mg/mL or more, more preferably 48.0 mg/mL or more, and most preferably 50.5 mg/mL or more. The total amount of the protein and the amino acid is preferably 78.0 mg/mL or less, more preferably 75.5 mg/mL or less, and most preferably 73 mg/mL or less. The range of the total amount of the protein and the amino acid is preferably any of 45.5 to 78.0 mg/mL, 48.0 to 78.0 mg/mL, 50.5 to 78.0 mg/mL, 45.5 to 75.5 mg/mL, 48.0 to 75.5 mg/mL, 50.5 to 75.5 mg/mL, 45.5 to 73 mg/mL, 48.0 to 73 mg/mL, 50.5 to 73 mg/mL, 60.0 to 67.0 mg/mL, and 62.0 to 65.5 mg/mL.

When the emulsified nutritional composition of the present invention contains the collagen peptide and a protein other than the collagen peptide and/or an amino acid, the ratio of the mass thereof is not particularly limited, and for example, the collagen peptide : the protein other than the collagen peptide and/or the amino acid is 1 : 0.7 to 1.2, preferably 1 : 0.8 to 1.1, more preferably 1 : 0.85 to 1.05, and still more preferably 1 : 0.90 to 0.95. Here, when only one of the protein other than the collagen peptide and the amino acid is contained, the ratio is a mass ratio of the collagen peptide : the protein other than the collagen peptide or the amino acid, and when both the protein other than the collagen peptide and the amino acid are contained, the ratio is a mass ratio of the collagen peptide : the total amount of the protein other than the collagen peptide and the amino acid.

When the emulsified nutritional composition of the present invention contains the collagen peptide and a protein other than the collagen peptide and/or an amino acid, the weight-average molecular weight of the collagen peptide and the protein other than the collagen peptide and/or the amino acid may be 2000 or less, and is preferably 500 to 1800, more preferably 800 to 1500, still more preferably 1000 to 1500, and even more preferably 1100 to 1400 or 1200 to 1300. Here, the expression "the weight-average molecular weight of the collagen peptide and the protein other than the collagen peptide and/or the amino acid" is a weight-average molecular weight of all molecules composed of all proteins (including the collagen peptide) and all amino acids contained in the emulsified nutritional composition, and is a value measured by the same method as in the case of the collagen peptide.

[Lipid]

The emulsified nutritional composition of the present invention contains a lipid as a nutrient component. The type of the lipid used in the present invention is not particularly limited, and examples thereof include plant oils such as rice oil, perilla oil, coconut oil, soybean oil, corn oil, rapeseed oil, palm oil, safflower oil, sunflower oil, soybean oil, olive oil, cottonseed oil, peanut oil, and cacao butter; animal oils such as fish oil, tallow, and lard; fatty acids, medium-chain fatty acid (having about 6 to 12 carbon atoms) triglyceride, docosahexaenoic acid, eicosapentaenoic acid, and the like; and a refined oil containing at least one of these. These lipids may be used singly or in combination of two or more kinds thereof.

In the emulsified nutritional composition of the present invention, the content of the lipid may be adjusted within a range satisfying the ratio of lipid calories described later, but is preferably 35 mg/mL or more, more preferably 40 mg/mL or more, and most preferably 50 mg/mL or more. The content of the lipid is preferably 80 mg/mL or less, more preferably 75 mg/mL or less, and most preferably 70 mg/mL or less since when the content of the lipid is too large, it is difficult to emulsify the emulsified nutritional composition and to administer the emulsified nutritional composition via a tube because of high viscosity. The range of the content of the lipid is preferably any of 35 to 80 mg/mL, 40 to 80 mg/mL, 50 to 80 mg/mL, 35 to 75 mg/mL, 40 to 75 mg/mL, 50 to 75 mg/mL, 35 to 70 mg/mL, 40 to 70 mg/mL, 50 to 70 mg/mL, 54 to 58 mg/mL, and 55 to 57 mg/mL.

[Carbohydrate]

The emulsified nutritional composition of the present invention may contain a carbohydrate as a nutrient component as necessary. Specific examples of the carbohydrate include a sugar and a dietary fiber. When the emulsified nutritional composition of the present invention contains a carbohydrate, one of a sugar and a dietary fiber may be contained, or both of them may be contained.

The sugar is a carbohydrate that is decomposed by a digestive enzyme and used as an energy source. The type of the sugar is not particularly limited, and examples thereof include monosaccharides such as glucose, galactose, fructose, and xylose; disaccharides such as sucrose, lactose, and maltose; oligosaccharides such as galactooligosaccharide, xylooligosaccharide, soybean oligosaccharide, fructooligosaccharide, and lactosucrose; polysaccharides such as dextrin and starch; and a starch decomposition product obtained by hydrolyzing a polysaccharide such as starch with an acid or an enzyme to reduce the molecular weight. These sugars may be used singly or in combination of two or more kinds thereof.

The dietary fiber is a carbohydrate that is not decomposed by a digestive enzyme. The type of the dietary fiber is not particularly limited, and examples thereof include crystalline cellulose, cellulose, pectin, alginic acid, a salt of alginic acid (alkali metal salts such as a potassium salt and a sodium salt), gellan gum, carrageenan, gum arabic, gum ghatti, gum tragacanth, locust bean gum, resistant starch, konjac mannan, glucomannan, β-glucan, indigestible dextrin, polydextrose, inulin, indigestible oligosaccharide, agarose, fucoidan, porphyran, laminaran, and guar gum. These dietary fibers may be used singly or in combination of two or more kinds thereof.

When a carbohydrate is contained in the emulsified nutritional composition of the present invention, the content thereof may be appropriately set according to the type of carbohydrate to be used, the energy density to be provided, and the like. For example, in the case of a sugar, the total amount of sugars is preferably 35 mg/mL or more, more preferably 40 mg/mL or more, and most preferably 50 mg/mL or more. The total amount of sugars is preferably 80 mg/mL or less, more preferably 75 mg/mL or less, and most preferably 70 mg/mL or less. The range of the total amount of sugars is preferably any of 35 to 80 mg/mL, 40 to 80 mg/mL, 50 to 80 mg/mL, 35 to 75 mg/mL, 40 to 75 mg/mL, 50 to 75 mg/mL, 35 to 70 mg/mL, 40 to 70 mg/mL, 50 to 70 mg/mL, 52 to 56 mg/mL, and 53 to 55 mg/mL. For example, in the case of a dietary fiber, the total amount of dietary fibers is preferably 6 mg/mL or more, more preferably 7 mg/mL or more, and most preferably 8 mg/mL or more. The total amount of dietary fibers is preferably 18 mg/mL or less, more preferably 17 mg/mL or less, and most preferably 16 mg/mL or less. The range of the total amount of dietary fibers is preferably any of 6 to 18 g/mL, 7 to 18 mg/mL, 8 to 18 mg/mL, 6 to 17 mg/mL, 7 to 17 mg/mL, 8 to 17 mg/mL, 6 to 16 mg/mL, 7 to 16 mg/mL, 8 to 16 mg/mL, 10 to 14 mg/mL, and 11 to 13 mg/mL. For example, the total amount of carbohydrates (total amount of sugar and dietary fiber) in the emulsified nutritional composition of the present invention is preferably 41 mg/mL or more, more preferably 48 mg/mL or more, and most preferably 58 mg/mL or more. The total amount of carbohydrates is preferably 98 mg/mL or less, more preferably 92 mg/mL or less, and most preferably 86 mg/mL or less. The range of the total amount of carbohydrates is preferably any of 41 to 98 mg/mL, 48 to 98 mg/mL, 58 to 98 mg/mL, 41 to 92 mg/mL, 48 to 92 mg/mL, 58 to 92 mg/mL, 41 to 86 mg/mL, 48 to 86 mg/mL, 58 to 86 mg/mL, 60 to 70 mg/mL, and 63 to 68 mg/mL.

[Emulsifier]

The emulsified nutritional composition of the present invention contains an emulsifier for making an emulsified form. The type of the emulsifier is not particularly limited, and examples thereof include lecithin, sucrose fatty acid ester, glycerin fatty acid ester, and sorbitan fatty acid ester. These emulsifiers may be used singly or in combination of two or more kinds thereof.

The content of the emulsifier in the emulsified nutritional composition of the present invention is not particularly limited, and is, for example, 1 to 6 mg/mL, preferably 1.5 to 5.5 mg/mL, more preferably 2 to 5 mg/mL, and still more preferably 3 to 4 mg/mL.

[Vitamin]

The emulsified nutritional composition of the present invention may contain a vitamin as necessary. The vitamin may include any one of a fat-soluble vitamin and a water-soluble vitamin, or may include a combination thereof.

Specific examples of the fat-soluble vitamin include vitamin A, vitamin D (particularly cholecalciferol), vitamin E, and vitamin K. These fat-soluble vitamins may be used singly or in combination of two or more kinds thereof. Examples of the water-soluble vitamin include a vitamin B group and vitamin C. Specific examples of the vitamin B group include vitamin $B_1$ (thiamine), vitamin $B_2$ (riboflavin), vitamin $B_3$ (niacin), vitamin $B_5$ (pantothenic acid), vitamin $B_6$, vitamin $B_7$ (biotin), vitamin $B_9$ (folic acid), and vitamin $B_{12}$ (cyanocobalamin). These water-soluble vitamins may be used singly or in combination of two or more kinds thereof.

As vitamin A, retinol palmitate can be preferably used. Vitamin A oil obtained by dissolving vitamin A in oil can also be used. When vitamin A is contained in the emulsified nutritional composition of the present invention, the content thereof is, for example, 0.2 to 2.0 μgRE/mL, and preferably 0.4 to 1.2 μgRE/mL.

As vitamin D, cholecalciferol (vitamin $D_3$) can be preferably used. When vitamin D is contained in the emulsified nutritional composition of the present invention, the content thereof is, for example, 0.001 to 0.08 μg/mL, and preferably 0.005 to 0.04 μg/mL.

As vitamin E, tocopherol acetate can be preferably used. When vitamin E is contained in the emulsified nutritional composition of the present invention, the content thereof is, for example, 0.008 to 0.12 mg/mL, and preferably 0.012 to 0.1 mg/mL.

As vitamin K, menaquinone-4 (vitamin $K_2$) can be preferably used. When vitamin K is contained in the emulsified nutritional composition of the present invention, the content thereof is, for example, 0.01 to 0.3 μg/mL, and preferably 0.02 to 0.2 μg/mL.

When vitamin C is contained in the emulsified nutritional composition of the present invention, the content thereof is, for example, 0.2 to 1.6 mg/mL, preferably 0.3 to 1.4 mg/mL, and more preferably 0.4 to 1.2 mg/100 mL.

As vitamin $B_1$, thiamine, thiamine hydrochloride, and the like can be used. When vitamin $B_1$ is contained in the emulsified nutritional composition of the present invention, the content thereof is, for example, 0.001 to 0.1 mg/mL, and preferably 0.002 to 0.07 mg/mL in terms of thiamine amount.

As vitamin $B_2$, riboflavin, riboflavin sodium phosphate, flavin mononucleotide, and the like can be used. When vitamin $B_2$ is contained in the emulsified nutritional composition of the present invention, the content thereof is, for example, 0.001 to 0.006 mg/mL, and preferably 0.002 to 0.005 mg/mL in terms of riboflavin amount.

As vitamin $B_6$, pyridoxine, a pyridoxine salt such as pyridoxine hydrochloride, and the like can be used. When vitamin $B_6$ is contained in the emulsified nutritional composition of the present invention, the content thereof is, for example, 0.001 to 0.01 mg/mL, and preferably 0.002 to 0.008 mg/mL in terms of pyridoxine amount.

When folic acid is contained in the emulsified nutritional composition of the present invention, the content thereof is, for example, 0.1 to 1.2 μg/mL, and preferably 0.2 to 1.0 μg/mL.

As vitamin $B_{12}$, cyanocobalamin, hydroxocobalamin acetate, methylcobalamin, and the like can be used. When vitamin $B_{12}$ is contained in the emulsified nutritional composition of the present invention, the content thereof is, for example, 0.001 to 0.012 $\mu$g/mL, and preferably 0.002 to 0.01 $\mu$g/mL.

As niacin, for example, nicotinic acid amide can be preferably used. When niacin is contained in the emulsified nutritional composition of the present invention, the content thereof is, for example, 0.01 to 0.12 mgNE/mL, and preferably 0.02 to 0.1 mgNE/mL.

As pantothenic acid, calcium pantothenate can be preferably used. When calcium pantothenate is contained in the emulsified nutritional composition of the present invention, the content thereof is, for example, 0.001 to 0.08 mg/mL, and preferably 0.005 to 0.04 mg/mL.

When biotin is contained in the emulsified nutritional composition of the present invention, the content thereof is, for example, 0.01 to 0.15 $\mu$g/mL, and preferably 0.02 to 0.12 $\mu$g/mL.

When at least one vitamin is contained in the emulsified nutritional composition of the present invention, the total content of vitamins may be set on the basis of the content according to the type of vitamin to be used. For example, in the case of a fat-soluble vitamin, the total amount of fat-soluble vitamins is preferably 0.006 mg/mL or more, more preferably 0.008 mg/mL or more, and still more preferably 0.01 mg/mL or more. The total amount of fat-soluble vitamins is preferably 0.034 mg/mL or less, more preferably 0.032 mg/mL or less, and still more preferably 0.03 mg/mL or less. The range of the total amount of fat-soluble vitamins is preferably any of 0.006 to 0.034 mg/mL, 0.008 to 0.034 mg/mL, 0.01 to 0.034 mg/mL, 0.006 to 0.032 mg/mL, 0.008 to 0.032 mg/mL, 0.01 to 0.032 mg/mL, 0.006 to 0.03 mg/mL, 0.008 to 0.03 mg/mL, and 0.01 to 0.03 mg/mL. For example, in the case of a water-soluble vitamin, the total amount of water-soluble vitamins is preferably 0.1 mg/mL or more, more preferably 0.2 mg/mL or more, and still more preferably 0.4 mg/mL or more. The total amount of water-soluble vitamins is preferably 1.2 mg/mL or less, more preferably 1.0 mg/mL or less, and still more preferably 0.8 mg/mL or less. The range of the total amount of water-soluble vitamins is preferably any of 0.1 to 1.2 mg/mL, 0.2 to 1.2 mg/mL, 0.4 to 1.2 mg/mL, 0.1 to 1.0 mg/mL, 0.2 to 1.0 mg/mL, 0.4 to 1.0 mg/mL, 0.1 to 0.8 mg/mL, 0.2 to 0.8 mg/mL, and 0.4 to 0.8 mg/mL.

[Mineral]

The emulsified nutritional composition of the present invention may contain a mineral as necessary. As the mineral, those used in normal nutritional compositions can be appropriately used. The type of the mineral is not particularly limited, and examples thereof include sodium, chlorine, potassium, calcium, magnesium, phosphorus, iron, zinc, copper, manganese, iodine, selenium, chromium, and molybdenum. These minerals may be used singly or in combination of two or more kinds thereof. The mineral may be contained in the form of a chloride, an organic acid salt, an inorganic acid salt, or the like.

When sodium is contained in the emulsified nutritional composition of the present invention, the content thereof is, for example, 0.1 to 6.0 mg/mL, and preferably 0.5 to 4.0 mg/mL.

When chlorine is contained in the emulsified nutritional composition of the present invention, the content thereof is, for example, 0.1 to 6.0 mg/mL, and preferably 0.5 to 4.0 mg/mL.

When potassium is contained in the emulsified nutritional composition of the present invention, the content thereof is, for example, 0.1 to 6.0 mg/mL, and preferably 0.5 to 4.0 mg/mL.

When calcium is contained in the emulsified nutritional composition of the present invention, the content thereof is, for example, 0.01 to 4.0 mg/mL, and preferably 0.02 to 2.0 mg/mL.

When magnesium is contained in the emulsified nutritional composition of the present invention, the content thereof is, for example, 0.05 to 2.0 mg/mL, and preferably 0.1 to 1.0 mg/mL.

When phosphorus is contained in the emulsified nutritional composition of the present invention, the content thereof is, for example, 0.1 to 4.0 mg/mL, and preferably 0.2 to 2.0 mg/mL.

When iron is contained in the emulsified nutritional composition of the present invention, the content thereof is, for example, 0.001 to 0.04 mg/mL, and preferably 0.002 to 0.02 mg/mL.

When zinc is contained in the emulsified nutritional composition of the present invention, the content thereof is, for example, 0.001 to 0.06 mg/mL, and preferably 0.002 to 0.04 mg/mL.

When copper is contained in the emulsified nutritional composition of the present invention, the content thereof is, for example, 0.0001 to 0.02 mg/mL, and preferably 0.0002 to 0.01 mg/mL.

When manganese is contained in the emulsified nutritional composition of the present invention, the content thereof is, for example, 0.001 to 0.02 mg/mL, and preferably 0.002 to 0.01 mg/mL.

When iodine is contained in the emulsified nutritional composition of the present invention, the content thereof is, for example, 0.01 to 0.6 $\mu$g/mL, and preferably 0.05 to 0.4 $\mu$g/mL.

When selenium is contained in the emulsified nutritional composition of the present invention, the content thereof is, for example, 0.005 to 0.2 $\mu$g/mL, and preferably 0.01 to 0.1 $\mu$g/mL.

When chromium is contained in the emulsified nutritional composition of the present invention, the content thereof is, for example, 0.005 to 0.2 $\mu$g/mL, and preferably 0.001 to 0.1 $\mu$g/mL.

When molybdenum is contained in the emulsified nutritional composition of the present invention, the content thereof is, for example, 0.005 to 0.2 $\mu$g/mL, and preferably 0.01 to 0.1 $\mu$g/mL.

When at least one mineral is contained in the emulsified nutritional composition of the present invention, the total content of minerals may be set on the basis of the content according to the type of mineral to be used. For example, the total amount of minerals is preferably 2 mg/mL or more, more preferably 3 mg/mL or more, and still more preferably 4 mg/mL or more. The total amount of minerals is preferably 10 mg/mL or less, more preferably 9 mg/mL or less, and still more preferably 8 mg/mL or less. The range of the total amount of minerals is preferably any of 2 to 10 mg/mL, 3 to 10 mg/mL, 4 to 10 mg/mL, 2 to 9 mg/mL, 3 to 9 mg/mL, 4 to 9 mg/mL, 2 to 9 mg/mL, 3 to 8 mg/mL, and 4 to 8 mg/mL.

[Water]

The emulsified nutritional composition of the present invention is in an emulsified form and contains water. The blending amount of water in the emulsified nutritional composition of the present invention is not particularly limited, but is preferably 700 mg/mL or more, more preferably 750 mg/mL or more, and still more preferably 800 mg/mL or more. The content of water is preferably 1000 mg/mL or less, more preferably 950 mg/mL or less, and still more preferably 900 mg/mL or less. The range of the content of water is preferably any of 700 to 1000 mg/mL, 750 to 1000 mg/mL, 800 to 1000 mg/mL, 700 to 950 mg/mL, 750 to 950 mg/mL, 800 to 950 mg/mL, 700 to 900 mg/mL, 750 to 900 mg/mL, and 800 to 900 mg/mL.

[Carnitine]

The emulsified nutritional composition of the present invention may contain carnitine as necessary. When carnitine is contained in the emulsified nutritional composition of the present invention, the content thereof is, for example, 0.05 to 2.0 mg/mL, preferably 0.1 to 1.0 mg/mL, more preferably 0.2 to 0.6 mg/mL, and still more preferably 0.3 to 0.5 mg/mL.

[Other components]

The emulsified nutritional composition of the present invention may contain additives such as a pH adjuster, a sweetener, an antioxidant, a preservative, a seasoning, a colorant, a fragrance, as necessary, in addition to the components described above.

[Energy density and energy ratio]

The emulsified nutritional composition of the present invention has total calories of 0.9 kcal/mL or more and a ratio of lipid calories to the total calories of 40% or more. In the conventional technique, when the total calories are 0.9 kcal/mL or more and the ratio of lipid calories to the total calories is as high as 40% or more, there is a disadvantage that the emulsified particles become large and the emulsion stability is deteriorated, but in the emulsified nutritional composition of the present invention, the above disadvantage is overcome by containing the collagen peptide having a specific weight-average molecular weight, and excellent emulsion stability can be provided.

The total calories of the emulsified nutritional composition of the present invention may be 0.9 kcal/mL or more, and are more preferably 0.95 kcal/mL or more. The total calories of the emulsified nutritional composition of the present invention are preferably 1.1 kcal/mL or less and more preferably 1.05 kcal/mL or less. The range of the total calories of the emulsified nutritional composition of the present invention is preferably any of 0.9 to 1.1 kcal/mL, 0.95 to 1.1 kcal/mL, 0.9 to 1.05 kcal/mL, 0.95 to 1.05 kcal/mL, and 0.98 to 1.02 kcal/mL. In order to satisfy the total calories of the emulsified nutritional composition within the above range, the contents of the protein, the amino acid, the lipid, and the carbohydrate contained in the emulsified nutritional composition may be adjusted. Here, the total calories (kcal/mL) of the emulsified nutritional composition is the total number of calories contained in 1 mL of the emulsified nutritional composition, specifically, the total calories of the protein, the amino acid, the lipid, and the carbohydrate contained in 1 mL of the emulsified nutritional composition. The total calories contained in 1 mL of the emulsified nutritional composition are calculated according to the following formula.

[Mathematical Formula 1]

$$T_E = P_E + A_E + L_E + C_E$$

$T_E$: Total calories of emulsified nutritional composition (kcal/mL)

$P_E$: Protein calories contained in 1 mL of emulsified nutritional composition (kcal/mL)
$A_E$: Amino acid calories contained in 1 mL of emulsified nutritional composition (kcal/mL)
$L_E$: Lipid calories contained in 1 mL of emulsified nutritional composition (kcal/mL)
$C_E$: Carbohydrate calories contained in 1 mL of emulsified nutritional composition (kcal/mL)

$$P_E \ (kcal/mL) = P \times 4 \ (kcal/g)$$

P: Protein amount contained in 1 mL of emulsified nutritional composition (g)

$$A_E \ (kcal/mL) = A \times 4 \ (kcal/g)$$

A: Amino acid amount contained in 1 mL of emulsified nutritional composition (g)

$$L_E \ (kcal/mL) = L \times 9 \ (kcal/g)$$

L: Lipid amount contained in 1 mL of emulsified nutritional composition (g)

$$C_E \ (kcal/mL) = C_1 \times 4 \ (kcal/g) + C_2 \times 2 \ (kcal/g)$$

$C_1$: Sugar amount contained in 1 mL of emulsified nutritional composition (g)
$C_2$: Dietary fiber amount contained in 1 mL of emulsified nutritional composition (g)

In the emulsified nutritional composition of the present invention, the ratio of lipid calories to the total calories may be 40% or more, but the ratio of lipid calories is more preferably 45% or more and most preferably 48% or more. The ratio of lipid calories to the total calories is preferably 70% or less, more preferably 65% or less, and still more preferably 60% or less. The range of the ratio of lipid calories to the total calories is preferably any of 40 to 70%, 45 to 70%, 48 to 70%, 40 to 65%, 45 to 65%, 48 to 65%, 40 to 60%, 45 to 60%, 48 to 60%, 45 to 55%, 48 to 52%, and 49 to 51%. In the conventional technique, the total calories are 0.9 kcal/mL or more, and the emulsion stability tends to decrease as the ratio of lipid calories increases in the range of 40% or more, but in the present invention, excellent emulsion stability can be provided even when the ratio of lipid calories is in the above range. In order to satisfy the ratio of lipid calories of the emulsified nutritional composition within the above range, the ratio of the protein, the amino acid, the lipid, and the carbohydrate contained in the emulsified nutritional composition may be adjusted. Here, the ratio (%) of lipid calories to the total calories is the ratio of lipid calories contained in the emulsified nutritional composition to the total calories of the emulsified nutritional composition, and is a value calculated according to the following formula.

[Mathematical Formula 2]

$$\text{Ratio of lipid calories to total calories } (\%) = (L_E/T_E) \times 100$$

$L_E$: Lipid calories contained in 1 mL of emulsified nutritional composition (kcal/mL)
$T_E$: Total calories of 1 mL of emulsified nutritional composition (kcal/mL)

In the emulsified nutritional composition of the present invention, the ratio of total calories of the protein and the amino acid to the total calories is not particularly limited, and is preferably 15% or more, more preferably 16% or more, and still more preferably 20% or more. The ratio of total calories of the protein and the amino acid to the total calories is preferably 32% or less, more preferably 30% or less, and still more preferably 28% or less. The range of the ratio of total calories of the protein and the amino acid to the total calories is preferably any of 15 to 32%, 16 to 32%, 20 to 32%, 15 to 30%, 16 to 30%, 20 to 30%, 15 to 28%, 16 to 28%, 20 to 28%, 22 to 26%, and 23 to 25%. In order to satisfy the ratio of the total calories of the protein and the amino acid of the emulsified nutritional composition within the above range, the ratio of the protein, the amino acid, the lipid, and the carbohydrate contained in the emulsified nutritional composition may be adjusted. Here, the ratio (%) of the total calories of the protein and the amino acid to the total calories is the ratio of total calories of the protein and the amino acid contained in the emulsified nutritional composition to the total calories of the emulsified nutritional composition, and is a value calculated according to the following formula.

Ratio of total calories of protein and amino acid to total calories (%) = {$(P_E + A_E)/T_E$} × 100     [Mathematical Formula 3]

$P_E$: Protein calories contained in 1 mL of emulsified nutritional composition (kcal/mL)
$A_E$: Amino acid calories contained in 1 mL of emulsified nutritional composition (kcal/mL)
$T_E$: Total calories of 1 mL of emulsified nutritional composition (kcal/mL)

In the emulsified nutritional composition of the present invention, the ratio of carbohydrate calories to the total calories is not particularly limited, and is preferably 15% or more, more preferably 16% or more, and still more preferably 20% or more. The ratio of carbohydrate calories to the total calories is preferably 32% or less, more preferably 30% or less, and still more preferably 28% or less. The range of the ratio of carbohydrate calories to the total calories is preferably any of 15 to 32%, 16 to 32%, 20 to 32%, 15 to 30%, 16 to 30%, 20 to 30%, 15 to 28%, 16 to 28%, 20 to 28%, 24 to 28%, and 25 to 27%. In order to satisfy the ratio of carbohydrate calories of the emulsified nutritional composition within the above range, the ratio of the protein, the amino acid, the lipid, and the carbohydrate contained in the emulsified nutritional composition may be adjusted. Here, the ratio (%) of carbohydrate calories to the total calories is the ratio of carbohydrate calories contained in the emulsified nutritional composition to the total calories of the emulsified nutritional composition, and is a value calculated according to the following formula.

[Mathematical Formula 4]

$$\text{Ratio of carbohydrate calories to total calories } (\%) = (C_E/T_E) \times 100$$

$C_E$: Carbohydrate calories contained in 1 mL of emulsified nutritional composition (kcal/mL)
$T_E$: Total calories of 1 mL of emulsified nutritional composition (kcal/mL)

In the emulsified nutritional composition of the present invention, the ratio between the calorie ratio of the lipid and the ratio of total calories of the protein and the amino acid is not particularly limited, and for example, the calorie ratio of the lipid : the ratio of total calories of the protein and the amino acid is 1 : 0.2 to 0.8, preferably 1 : 0.3 to 0.7, more preferably 1 : 0.4 to 0.6, and still more preferably 1 : 0.46 to 0.50.

In the emulsified nutritional composition of the present invention, the ratio between the calorie ratio of the lipid and the calorie ratio of the carbohydrate is not particularly limited, and for example, the calorie ratio of the lipid : the calorie ratio of the carbohydrate is 1 : 0.2 to 0.8, preferably 1 : 0.3 to 0.7, more preferably 1 : 0.4 to 0.6, and still more preferably 1 : 0.50 to 0.54.

In the emulsified nutritional composition of the present invention, the ratio between the total calorie ratio of the protein and the amino acid and the calorie ratio of the carbohydrate is not particularly limited, and for example, the total calorie ratio of the protein and the amino acid : the calorie ratio of the carbohydrate is 1 : 0.8 to 1.4, preferably 1 : 0.9 to 1.3, and most preferably 1 : 1.0 to 1.2.

[Emulsified form]

The emulsified form of the emulsified nutritional composition of the present invention is not particularly limited, and may be either an oil-in-water type or a water-in-oil type, but an oil-in-water type is preferable.

The median diameter of the emulsified particles in the emulsified nutritional composition of the present invention is not particularly limited, and is, for example, 2.0 μm or less. Other specific examples of the median diameter of the emulsified particles in the emulsified nutritional composition of the present invention include 0.2 to 1.9 μm, 0.2 to 1.0 μm, 0.4 to 0.8 μm, and 0.5 to 0.7 μm. Although a restrictive interpretation is not desired, it is considered that the emulsified nutritional composition of the present invention can have excellent emulsion stability because the median diameter of the emulsified particles can satisfy the above range. Here, the median diameter of the emulsified particles is a volume-based median diameter (D50) as measured by a laser diffraction particle size distribution measuring apparatus.

[Production method]

A method for producing an emulsified nutritional composition of the present invention is not particularly limited, and the emulsified nutritional composition can be produced by the same method as a general emulsified preparation. Specifically, the emulsified nutritional composition of the present invention can be produced by adding a predetermined amount of the above-mentioned components to water, mixing them, and then emulsifying them with a homogenizer.

It is desirable that the emulsified nutritional composition of the present invention is subjected to heat sterilization treatment before or after being filled in a container such as an aluminum pouch or a soft bag. The storage stability can be enhanced by subjecting the emulsified nutritional composition to heat sterilization treatment as described above. The temperature condition of the heat sterilization treatment is not particularly limited, and is, for example, 110 to 150°C and preferably 120 to 145°C. Specific examples of the heat sterilization treatment include pressure heat sterilization, ultra high temperature instantaneous sterilization (UHT), and high temperature short time sterilization (HTST).

[Use applications and using method of emulsified nutritional composition]

The emulsified nutritional composition of the present invention can be used as a nutraceutical food such as a concentrated liquid diet, an enteral nutrient, a comprehensive liquid diet, or a medical food. The emulsified nutritional composition of the present invention can be particularly suitably used as a concentrated liquid diet or an enteral nutrient for a dysphagic patient.

The emulsified nutritional composition of the present invention can prevent or suppress refeeding syndrome by being administered to a subject in a poor nutrition state.

The refeeding syndrome is a generic term for a series of metabolic complications developed by actively providing nutritional supplementation to a subject in a poor nutrition state. Specific symptoms of the refeeding syndrome include hypophosphatemia, hypokalemia, hypomagnesemia, and vitamin B1 deficiency. By intake or administration of the composition of the present invention, in particular, hypophosphatemia can be prevented or suppressed.

Examples of the subject in a poor nutrition state include subjects who meet one or more of the following criteria (a) to (d) defined in the NICE guidelines:

(a) BMI of less than 16 kg/m$^2$;
(b) 15% or more unintentional weight loss in the last 3 to 6 months;
(c) no nutritional intake for 10 days or more; and
(d) hypokalemia, hypophosphatemia, or hypomagnesemia before refeeding; or a subject who meets two or more of the following criteria (e) to (h):
(e) BMI of less than 18.5 kg/m$^2$;
(f) 10% or more unintentional weight loss in the last 3 to 6 months;
(g) no nutritional intake for 5 days or more; and
(h) a history of alcohol dependence or a history of use of insulin, chemotherapeutic antacids, or diuretics.

An undernourished subject can be classified into a marasmus type in which both protein and calorific value are deficient; a kwashiorkor type in which protein deficiency is more severe than calorific value deficiency; and a marasmus-kwashiorkor type which is an intermediate type between the two. The emulsified nutritional composition of the present invention can effectively prevent or suppress the refeeding syndrome, particularly by being administered to a marasmus-kwashiorkor-type undernourished subject and a kwashiorkor-type undernourished subject.

The form of intake or administration of the emulsified nutritional composition of the present invention is not particularly limited. For example, in the case of use as a nutraceutical food for a healthy person, oral intake can be mentioned, and in the case of use for a dysphagic patient, tube administration via a gastrostomy tube (catheter), a nasal tube (catheter), or the like can be mentioned.

The intake or administration amount of the emulsified nutritional composition of the present invention is appropriately set according to the symptoms, sex, age, and the like of a person to be ingested or administered, and for example, the intake or administration amount of the emulsified nutritional composition of the present invention per day is about 100 to 2000 kcal, preferably about 200 to 1600 kcal in terms of calorie intake, and about 1 to 5 times a day, preferably about 1 to 3 times a day.

Examples

Hereinafter, the present invention will be specifically described with reference to Examples and the like. Note that the present invention is not limited to the following embodiments.

Test Example 1: Influence of molecular weight of collagen peptide on particle size and emulsion stability of emulsified nutritional composition

1. Preparation of emulsified nutritional composition

An emulsified nutritional composition (oil-in-water type) having the composition shown in Table 1 was prepared.

Specifically, a predetermined amount of each component shown in Table 1 was added to water, mixed with a mixer, and then homogenized (50 MPa, 2 passes) with a high pressure homogenizer (LAB1000, SMT Co., Ltd.). A pouch was filled with 400 mL of the homogenized emulsified nutritional composition, and then subjected to heat sterilization treatment (127°C, 6 minutes 40 seconds).

[Table 1]

| Blending component | | Blending ratio (mg/mL) |
|---|---|---|
| Protein/amino acid | Collagen peptide shown in Table 2 | 33 |
| | Soybean peptide | 21 |
| | Amino acid | 9.8 |
| Carbohydrate | Dextrin | 54 |
| | Crystalline cellulose | 0.67 |
| | Low methoxyl pectin | 11 |
| Lipid | Plant oil | 28 |
| | Medium-chain fatty acid triglyceride | 28 |
| L-carnitine | | 0.40 |
| Fat-soluble vitamin oil | Vitamin A oil, vitamin D oil | 0.019 |
| Vitamin mix preparation | Mixture of vitamin K2, vitamin B12, vitamin C, vitamin B1, vitamin E, vitamin B2, niacin, vitamin B6, folic acid, and pantothenic acid | 1.7 |
| Mineral | Tricalcium phosphate | 0.96 |
| | Ferric pyrophosphate | 0.020 |
| | Magnesium chloride | 1.8 |
| | Tetrasodium pyrophosphate | 1.7 |
| | Sodium hydroxide | 0.28 |
| | Tetrapotassium pyrophosphate | 0.49 |
| | Potassium hydroxide | 1.1 |
| Emulsifier | | 3.7 |
| Kelp extract | | 0.17 |
| Yeast | | 0.79 |
| pH adjuster | | 1.1 |
| Fragrance | | 1.3 |
| Water | | q.s. |
| Total calories | | 1.0 kcal/mL |
| Ratio of calories of each nutrient component to total calories | Lipid | 50% |
| | Protein and amino acid | 24% |
| | Carbohydrate | 26% |

[Table 2]

| Collagen peptide used | | |
|---|---|---|
| | Origin/type | Weight-average molecular weight[#] |
| Example 1 | · Hydrolysate of fish-derived type I collagen | 1400 |

(continued)

| Collagen peptide used | | |
|---|---|---|
| | Origin/type | Weight-average molecular weight[#] |
| Example 2 | · Hydrolysate of fish-derived type I collagen | 1400 |
| Example 3 | · Hydrolysate of porcine-derived type I collagen | 1200 |
| Example 4 | · Hydrolysate of porcine-derived type I collagen | 2100 |
| Comparative Example 1 | Hydrolysate of fish-derived type I collagen | 3100 |
| Comparative Example 2 | Hydrolysate of fish-derived type I collagen | 4500 |
| Comparative Example 3 | · Hydrolysate of porcine-derived type I collagen | 5000 |
| Comparative Example 4 | · Hydrolysate of porcine-derived type I collagen | 5000 |
| Comparative Example 5 | · Hydrolysate of porcine-derived type I collagen | 5000 |
| # The weight-average molecular weight is a value measured using gel permeation chromatography (GPC) using, as standard substances, cytochrome c (molecular weight: 12,327), aprotinin (molecular weight: 6,512), bacitracin (molecular weight: 1,450), angiotensin II (molecular weight: 1,046), a tetrapeptide consisting of Gly-Gly-Tyr-Arg (molecular weight: 451), and a tripeptide consisting of Gly-Gly-Gly (molecular weight: 189). | | |

## 2. Evaluation of particle size and emulsion stability of emulsified nutritional composition

### 2-1. Test methods

(1) Particle size

Each emulsified nutritional composition after heat sterilization was left at room temperature (about 25°C) overnight, and then the particle size of the emulsified particles was measured using a laser diffraction particle size distribution measuring apparatus (SALD-2200 (Shimadzu Corporation)). Specific measurement conditions are as follows. Under the conditions of dispersion medium: water, sample refractive index: 1.60-0.10i, dispersion medium refractive index: 1.33-0.00i, and pump speed: 8.0, the sample concentration was adjusted so that the measured absorbance range was 0.01 to 0.20 when the measurement was performed. After performing the ultrasonic treatment for 30 seconds, the median diameter of the particles was measured under the above measurement conditions. The distribution of the particles was based on the volume.

(2) Emulsion stability

Each of the emulsified nutritional compositions was centrifuged, the creaming (lipid floating) thickness of the upper layer was measured, and the degree of phase separation was confirmed. 10 mL of each emulsified nutritional composition was put in "Scaled test tube with plugs economy type EMKS-16.5 (NICHIDEN RIKA GLASS CO., LTD.)" and centrifuged using a centrifuge (himacCT6D, Hitachi Koki Co., Ltd.) under the condition of 3600 rpm for 10 minutes.

### 2-2. Test results

The obtained results are shown in Table 3. Fig. 1A shows a relationship between a weight-average molecular weight of a collagen peptide used and a particle size of emulsified particles, and Fig. 1B shows a relationship between a weight-average molecular weight of collagen peptide used and a creaming thickness of an upper layer after centrifugation. As a result, it was found that when a collagen peptide having a weight-average molecular weight of 3000 or less is blended in the nutritional emulsion composition having total calories of 1 kcal/mL and a calorie ratio of the lipid of 50%, the particle size of the emulsified particles is 2.0 μm or less, and excellent emulsion stability is achieved. In particular, it was found that in the case of blending a collagen peptide having a weight-average molecular weight of 1500 or less, the particle size of the emulsified particles is 1.0 μm or less, and more excellent emulsion stability is achieved. On the other hand, in the case of blending a collagen peptide having a weight-average molecular weight of more than 3000, the particle size of the emulsified particles was more than 2.7 μm, and emulsion stability could not be improved.

From the above results, it became clear that in order to provide excellent emulsion stability to the nutritional emulsion composition having total calories of 0.9 kcal/mL or more and a calorie ratio of the lipid of 40% or more, it is effective to blend a collagen peptide having a weight-average molecular weight of 3000 or less.

# EP 4 748 239 A1

[Table 3]

| | Weight-average molecular weight of blended collagen peptide | Particle size (μm) of emulsified particles | Emulsion stability |
|---|---|---|---|
| Example 1 | 1400 | 0.582 | The creaming (lipid floating) thickness of the upper layer after centrifugation was 2 to 3 mm, and no phase separation was observed. |
| Example 2 | 1400 | 0.587 | Same as above |
| Example 3 | 1200 | 0.623 | Same as above |
| Example 4 | 2100 | 1.850 | Same as above |
| Comparative Example 1 | 3100 | 3.826 | The creaming (lipid floating) thickness of the upper layer after centrifugation was 6 to 15 mm, and phase separation or a tendency thereof was observed. |
| Comparative Example 2 | 4500 | 3.157 | Same as above |
| Comparative Example 3 | 5000 | 3.641 | Same as above |
| Comparative Example 4 | 5000 | 3.815 | Same as above |
| Comparative Example 5 | 5000 | 2.771 | Same as above |

The weight-average molecular weights of proteins (soybean peptide in Table 1 and collagen peptide in Table 2) and amino acid (amino acid in Table 1) contained in the nutritional emulsion compositions of Examples 1 and 3 and Comparative Examples 1 and 3 were measured by the same method as described above. The measurement results are shown in Table 4.

[Table 4]

| | Weight-average molecular weight of blended protein and amino acid |
|---|---|
| Example 1 | 1300 |
| Example 3 | 1200 |
| Comparative Example 1 | 2400 |
| Comparative Example 3 | 3700 |

## Claims

1.  An emulsified nutritional composition comprising a protein and a lipid, wherein

    the emulsified nutritional composition has total calories of 0.9 kcal/mL or more and a ratio of lipid calories to the total calories of 40% or more, and
    the emulsified nutritional composition comprises a collagen peptide having a weight-average molecular weight of 3000 or less as the protein.

2.  The emulsified nutritional composition according to claim 1, wherein a median diameter of emulsified particles in the emulsified nutritional composition is 2.0 μm or less.

3.  The emulsified nutritional composition according to claim 1 or 2, comprising 25 mg/mL or more of the collagen peptide.

4.  The emulsified nutritional composition according to claim 1 or 2, comprising a protein other than the collagen peptide

14

and/or an amino acid, wherein a mass ratio of the collagen peptide : the protein other than the collagen peptide and/or the amino acid is 1 : 0.7 to 1.2.

5. The emulsified nutritional composition according to claim 4, wherein a weight-average molecular weight of the collagen peptide and the protein other than the collagen peptide and/or the amino acid is 2000 or less.

6. The emulsified nutritional composition according to claim 1 or 2, further comprising a carbohydrate.

FIG. 1

## INTERNATIONAL SEARCH REPORT

| International application No. |
|---|
| **PCT/JP2024/025862** |

**A. CLASSIFICATION OF SUBJECT MATTER**

*A23L 33/18*(2016.01)i; *A23L 5/00*(2016.01)i; *A23L 33/17*(2016.01)i; *A23L 33/115*(2016.01)i; *A23L 33/125*(2016.01)i
FI:   A23L33/18; A23L33/115; A23L33/125; A23L5/00 L; A23L5/00 M; A23L33/17

According to International Patent Classification (IPC) or to both national classification and IPC

**B. FIELDS SEARCHED**

Minimum documentation searched (classification system followed by classification symbols)

A23L33/18; A23L5/00; A23L33/17; A23L33/115; A23L33/125

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/FSTA/MEDLINE/EMBASE/BIOSIS (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2019-503698 A (FRESENIUS KABI DEUTSCHLAND GMBH) 14 February 2019 (2019-02-14)<br>claims, paragraphs [0009], [0010], [0019] | 1-6 |
| A | WO 2019/017006 A1 (TERUMO KABUSHIKI KAISHA) 24 January 2019 (2019-01-24) | 1-6 |
| A | JP 2021-103991 A (NOF CORPORATION) 26 July 2021 (2021-07-26) | 1-6 |

☐ Further documents are listed in the continuation of Box C.          ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/025862**

| Patent document cited in search report | | | Publication date (day/month/year) | Patent family member(s) | | | Publication date (day/month/year) |
|---|---|---|---|---|---|---|---|
| JP | 2019-503698 | A | 14 February 2019 | US 2019/0037903 A1 claims, paragraphs [0006], [0007], [0019] WO 2017/134245 A1 EP 3804743 A1 | | | |
| WO | 2019/017006 | A1 | 24 January 2019 | (Family: none) | | | |
| JP | 2021-103991 | A | 26 July 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2023282316 A